(19) Europäisches Patentamt / European Patent Office / Office européen des brevets

(11) **EP 4 070 910 B1**

(12) **EUROPEAN PATENT SPECIFICATION**

(45) Date of publication and mention
of the grant of the patent:
**02.04.2025  Bulletin 2025/14**

(21) Application number: **21805828.7**

(22) Date of filing: **12.02.2021**

(51) International Patent Classification (IPC):
*B29C 65/46* (2006.01)      *B29C 65/48* (2006.01)
*B23K 26/00* (2014.01)      *B23K 26/0622* (2014.01)
*B23K 26/352* (2014.01)      *B23K 103/02* (2006.01)
*B23K 103/08* (2006.01)      *B23K 103/18* (2006.01)

(52) Cooperative Patent Classification (CPC):
(C-Sets available)
**B23K 26/0006; B23K 26/0622; B23K 26/355;
B23K 26/3584; B29C 65/46; B29C 65/4835;
B29C 66/0246; B29C 66/1122; B29C 66/30321;
B29C 66/30322; B29C 66/30325; B29C 66/45;
B29C 66/7392; B29C 66/742; B29C 66/8122;**
(Cont.)

(86) International application number:
**PCT/JP2021/005260**

(87) International publication number:
**WO 2022/172398 (18.08.2022 Gazette 2022/33)**

(54) **JOINED BODY AND METHOD FOR MANUFACTURING A JOINED BODY**

VERBUNDENER KÖRPER UND VERFAHREN ZUR HERSTELLUNG EINES VERBUNDENEN KÖRPERS

CORPS ASSEMBLÉ ET PROCÉDÉ DE FABRICATION D'UN CORPS ASSEMBLÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**12.10.2022  Bulletin 2022/41**

(73) Proprietor: **Mutsuki Electric Co., Ltd.**
**Osaka-shi, Osaka 544-0004 (JP)**

(72) Inventor: **SAI, Seiichi**
**Osaka-shi**
**Osaka**
**5440004 (JP)**

(74) Representative: **Ricker, Mathias**
**Wallinger Ricker Schlotter Tostmann**
**Patent- und Rechtsanwälte Partnerschaft mbB**
**Zweibrückenstraße 5-7**
**80331 München (DE)**

(56) References cited:
**EP-A1- 3 078 480         EP-A1- 3 228 440
DE-A1- 102015 206 534     DE-A1- 102016 211 708
DE-A1- 102017 210 639     DE-A1- 102019 208 677
JP-A- 2006 501 070        JP-A- 2006 501 070
JP-A- 2016 147 404        JP-A- H06 106 693
JP-A- H07 116 870         JP-A- H07 116 870
JP-B2- 4 407 515          US-A1- 2008 003 401**

(52) Cooperative Patent Classification (CPC): (Cont.)
**B29C 66/8242; B29C 66/8322;** B23K 2103/02;
B23K 2103/08; B23K 2103/26; B29C 66/7394

C-Sets
**B29C 66/8122, B29K 2909/02**

**Description**

Technical Field

The present disclosure relates to a joint and a method for manufacturing a joint.

Background Art

In a joint that bonds members made of the same or different materials to each other, there is a case where an anchor portion having an uneven shape is formed on a surface of one of the members in order to increase the bonding strength.

For example, Patent Literature 1 below suggests a method of forming an anchor portion by bonding approximately spherical metal powder to a bonding surface, by performing laser cladding to a surface to which the metal powder adheres after making the metal powder adhere to the bonding surface of one of the members.

In order to obtain a high anchor effect by forming the anchor portion on the bonding surface, it is important to increase the bonding strength of the anchor portion to the bonding surface while maintaining the shape that makes the anchor portion (metal powder) adhering to the bonding surface easily achieve the anchor effect.

However, in the method of Patent Literature 1, when it is desired to improve the adhesive strength of the anchor portion to the bonding surface, the metal powder melts and deforms into a shape that does not easily achieve the anchor effect. When it is desired to maintain a shape that easily achieves the anchor effect, the metal powder becomes less likely to melt, and the adhesive strength of the anchor portion to the bonding surface decreases.

The EP 3 228 440 A1 discloses a metal-plastic composite part. For a strong bond of a metal-plastic layered composite part, it discloses a fiber-reinforced thermoplastic and a surface structure embedded in the plastic and penetrating a fiber reinforcement of the plastic with pins of the metal.

The DE 10 2017 210 639 A1 discloses a composite component comprising a first component made of a fiber-reinforced or lattice-reinforced thermoplastic composite material and a second component, the first component having a first joining surface and the second component having a second joining surface, and the first component and the second component being joined to one another via the first and second joining surfaces, wherein the second joining surface has surface protrusions that engage the fiber or grid reinforced thermoplastic composite material and penetrate the fiber or grid reinforcement of the fiber or grid reinforced composite material.

The EP 3 078 480 A1 discloses a method for connecting a surface-structured workpiece and a plastic workpiece using a joining tool including a sonotrode, said surface-structured workpiece comprising a structured contact surface section, said structured contact surface section comprising pin-like elements extending away from the structured contact surface section, said method comprising the following steps: positioning the surface-structured workpiece and the plastic workpiece on an anvil such that the structured contact surface section faces a contact surface of the plastic workpiece, positioning the joining tool on the metal workpiece so as to bring the sonotrode into contact with an outer surface of the metal workpiece, the outer surface being opposite to the structured contact surface section, applying a pressure to the sonotrode and/or the anvil perpendicular to the contact surface to hold the workpieces fixed between the anvil and the sonotrode and applying ultrasonic vibrations to the workpieces by the sonotrode for a predetermined period of time, so that softening of the plastic workpiece is induced and the pin-like elements penetrate into the plastic workpiece.

The DE 10 2016 211 708 A1 discloses a composite material comprising two materials, wherein at least one first material is metal-containing and at least one second material is plastic-containing, and these materials are bonded to one another without adhesion via at least one claw.

The DE 10 2015 206 534 A1 discloses a joining arrangement comprising at least two joining partners, of which a first joining partner has a thermoplastic material and a second joining partner has at least one joining element, in particular with an undercut contour, the second joining partner being driven with its joining element into the first joining partner in a joining direction in the case of plasticized plastic material with material displacement. According to the invention, the connecting element of the second joining partner is driven in to a joining depth while maintaining a residual base thickness towards the remote component side of the first joining partner, in particular with backflow of the still plasticized plastic material into the undercut contour of the connecting element.

The US 2008/003401 A1 discloses a method for joining a first structural member and a metallic substrate. This method involves drawing projections from a metallic substrate using a Co-Meld or other like process. Individual plies of composite materials are laid upon the metallic substrate and projections. These projections penetrate the individual ply or layers of the composite material. A mechanical feature that serves as a retaining device is located at the distal end of the projections in order to prevent separation of the composite materials from the metallic substrate. The composite materials is infused with a resin or other material to complete the formation of the composite material. Additionally, other layers of composite material are placed over the mechanical features located at the distal ends.

The JP H06 106693 A discloses that sand blast is applied to the surface of a steel plate to form primary recesses and secondary recesses are formed by the action of mineral acid. A fluororesin film is introduced into a reduced pressure furnace from above so as to be pressed by a roll against the surface of the plate wherein the recesses have been formed and which has been heated to a temperature to soften or melt the film. Just after the steel plate has passed the furnace, the surface of the film is strongly pressed into the recesses because the atmospheric pressure is larger than the air pressure in the recesses. A final finishing roll smoothens the surface.

The DE 10 2019 208 677 A1 discloses a method of manufacturing a hybrid component comprising building up a metal part layer by layer by a 3D printing method, wherein a bonding surface of the metal part is formed with a plurality of protruding pins, disposing a fiber-reinforced plastic part having a plurality of reinforcing fibers embedded in a thermoplastic matrix material on the bonding surface of the metal part, heating the matrix material to a temperature at which the matrix material is flowable, pressing the fiber-reinforced plastic part and the metal part together so that the pins of the metal part penetrate the flowable matrix material of the fiber-reinforced plastic part, and consolidating the matrix material while applying a consolidation pressure.

The JP 2006/501070 A discloses a method of modifying the structure of workpiece is provided. The method comprises a first step of causing relative movement between a power beam and the workpiece so that a region of the workpiece is melted, and the melted material displaced to form a projection at a first location in the region and a hole at a different location in the region. The melted material is then allowed to at least partially solidify after which the first step is repeated one or more times, with the region corresponding to each repeat intersecting the region of the first step.

The JP H07 116870 A discloses that when irradiating the only specific area on the surface of the base material with the ultraviolet laser beam, there are the following methods. By arranging a mask opened as a window at the front of the base material, the window corresponds to an area for forming a film, the whole surface is irradiated by the ultraviolet laser beam. Scanning is performed on the mask with a beam-shape ultraviolet laser. By providing a scanning mechanism such as a galvanomirror in front of the insulating base material, scanning is performed with a beam-shape ultraviolet laser. At the state in which the surface of the base material is irradiated with a beam-shape ultraviolet laser, the base material is allowed to move by an X-Y table, etc., to relatively scan with the ultraviolet laser beam.

Citation List

Patent Literature

PTL 1: Japanese Unexamined Patent Publication JP-A 2016-130003

Summary of Invention

Technical Problem

The present disclosure was made in consideration of the above-described points, and an object thereof is to form an anchor portion having a shape that easily achieves the anchor effect and having high bonding strength to the bonding surface, thereby improving the bonding strength of the joint.

Solution to Problem

The invention is defined in a first aspect by a joint according to claim 1 and in a second aspect by a method for manufacturing a joint according to claim 8. Preferred embodiments of the invention are defined in the dependent claims.

Advantageous Effects of Invention

In the present disclosure, it is possible to form an anchor portion that has a shape that easily achieves the anchor effect and has high bonding strength to the bonding surface, thereby obtaining the joint having high bonding strength.

Brief Description of Drawings

[Fig. 1] Fig. 1 is a sectional view illustrating a schematic configuration of a joint according to a first embodiment of the present disclosure.
[Fig. 2] Fig. 2 is a plan view illustrating a schematic configuration of a first bonding surface of a first member that configures the joint of Fig. 1.
[Fig. 3] Fig. 3 is an A-A sectional view of Fig. 2.

[Fig. 4] Fig. 4 is a B-B sectional view of Fig. 2.

[Fig. 5] Fig. 5 is a view illustrating a softening process of a method for manufacturing a joint according to the first embodiment of the present disclosure.

[Fig. 6] Fig. 6 is a view illustrating a pressurizing process of the method for manufacturing a joint according to the first embodiment of the present disclosure.

[Fig. 7] Fig. 7 is a view illustrating a softening process of a method for manufacturing a joint according to a second embodiment of the present disclosure.

[Fig. 8] Fig. 8 is a view illustrating a pressurizing process of the method for manufacturing a joint according to the second embodiment of the present disclosure.

[Fig. 9] Fig. 9 is an SEM photograph of a metal bonding surface of a metal member in Example of the present disclosure.

[Fig. 10] Fig. 10 is an SEM photograph of a cross section obtained by cutting the metal member in a first direction in Example of the present disclosure.

[Fig. 11] Fig. 11 is an SEM photograph of a cross section obtained by cutting the metal member in a second direction in Example of the present disclosure.

Description of Embodiments

(First Embodiment)

Hereinafter, a first embodiment of the present disclosure will be described with reference to the drawings. In the drawings, there is a case where the size or the like of the members are written being exaggerated for the sake of description.

(1) Joint 10

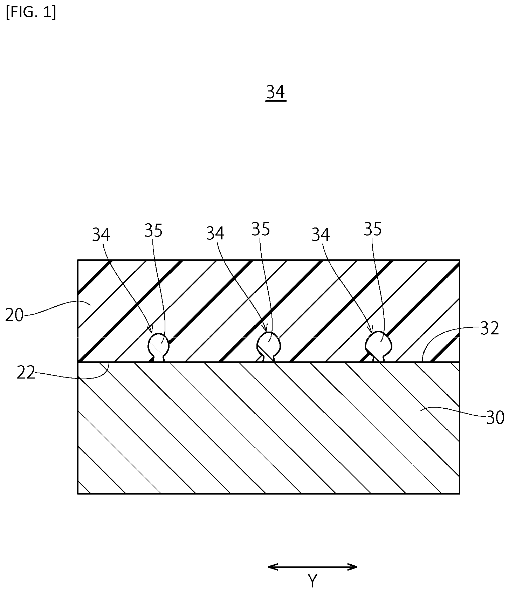

First, a joint 10 of the present embodiment will be described. As illustrated in Fig. 1, the joint 10 includes a first member (hereinafter, there is also a case of being referred to as "metal member") 30 made of metal, and a second member (hereinafter, there is also a case of being referred to as "synthetic resin member") 20 made of thermoplastic resin. The metal member 30 has a first bonding surface (hereinafter, there is a case of being referred to as "metal bonding surface") 32 with an anchor portion 34 formed on the surface thereof. The synthetic resin member 20 has a second bonding surface (hereinafter, there is a case of being referred to as "resin bonding surface") 22 on the surface thereof. The joint 10 is made by bonding the resin bonding surface 22 to the metal bonding surface 32 to integrate the metal member 30 and the synthetic resin member 20.

(2) Synthetic Resin Member 20

The synthetic resin member 20 is a member made by molding the thermoplastic resin into a predetermined shape, such as a block, plate, or wire shape. The synthetic resin member 20 may be a coating film of thermoplastic resin or an adhesive layer made of thermoplastic resin adhesive. Specific examples of the thermoplastic resin that makes the synthetic resin member 20 include polypropylene resin (PP resin), polyacetal resin (POM resin), polyphenylene sulfide resin (PPS resin), polyetheretherketone resin (PEEK), acrylonitrile/butadiene/styrene resin (ABS resin), polyethylene resin (PE resin), polybutylene terephthalate resin (PBT resin), polyamide resin (PA resin) such as nylon 66 (PA66), epoxy resin, liquid crystal polymer (LCP resin), modified polyphenylene ether resin (modified PPE), reactor type soft polypropylene resin (metallocene reactor type TPO resin), perfluoroalkoxy alkanes (PFA), and ethylene tetrafluoroethylene copolymer (ETFE). The synthetic resin member 20 may be made of a carbon fiber reinforced thermoplastic resin (CFRTP), in which carbon fibers are blended into the above- described thermoplastic resin, or a resin, in which a reinforcing material such as glass fiber or talc, flame retardants, degradation inhibitors, and elastomer components are blended into the above-described thermoplastic resin.

(3) Metal Member 30

The metal member 30 is a member obtained by molding the metal into a predetermined shape, such as a block, plate, or wire shape. A metal that makes the metal member 30 is not particularly limited, and various types of metals can be used. For example, copper (Cu), iron (Fe), aluminum (Al), titanium (Ti), nickel (Ni), chromium (Cr), and the like can be used as the metal that makes the metal member 30. The metal member 30 may be made of an alloy consisting of two or more metals, such as copper alloy, iron alloy (steel material), aluminum alloy, stainless steel, titanium alloy, nickel alloy, and chromium alloy.

The metal member 30 preferably has a higher hardness than the synthetic resin member 20 at normal temperature (25°C). When bonding the metal member 30 and the synthetic resin member 20 to each other, the hardness of the metal member 30 is preferably higher than that of the synthetic resin member 20. When bonding the metal member 30 and the synthetic resin member 20 to each other, the hardness of the metal member 30 may be higher than that of the synthetic resin member 20, and after the bonding, the hardness of the synthetic resin member 20 may be higher than that of the metal member 30 under normal temperature. Here, hardness under normal temperature is Vickers hardness measured in accordance with JIS Z 2244, and in a case where the metal member 30 and the synthetic resin member 20 are under high temperature when bonding the metal member 30 and the synthetic resin member 20 to each other, hardness is high-temperature Vickers hardness measured in accordance with JIS Z 2252.

The shape of the metal member 30 can be any desired shape depending on the application or the like. As the method for molding the metal member 30, any method can be applied, and casting by pouring molten metal into a mold having a desired shape, cutting using a machine tool or the like, punching using a press machine or the like, and the like may be used.

The metal member 30 may also have an oxide film (metal oxide) formed on the metal bonding surface 32 or in an anchor portion 34 which will be described later. The oxide film may be a natural oxide film which is naturally formed on the surface of metal. The oxide film may be formed on the surface of the metal member 30 by surface treatment with an oxidant, electrolytic treatment with anodic oxidation, plasma oxidation treatment, or heat oxidation treatment in the oxygen-containing gas, and the like.

As a preferable aspect, the oxide film may be formed on the surface of the metal member 30 by rapidly heating the surface of the metal member 30 under an atmosphere of the oxygen-containing gas, such as in the air. It is preferable that the rising temperature of the surface of the metal member 30 per minute during rapid heating is equal to or higher than the melting point temperature of the metal that makes the metal member 30. By rapidly heating the surface of the metal member 30 in this manner, a dense oxide film can be formed on the surface of the metal member 30. Furthermore, by rapidly heating the surface of the metal member 30, microcracks are generated on the surface of the oxide film, and a bonding area with the synthetic resin member 20 becomes larger.

Although the surface of the metal member 30 can be heated rapidly by various methods such as laser heating, induction heating, or resistor heating, the temperature raising speed at the time of heating is fast and the temperature control is easy, and thus, it is preferable to heat the surface of the metal member 30 by irradiating a laser beam to form the oxide film.

On the metal bonding surface 32 of the metal member 30, the roughening treatment is performed and the anchor portion 34 is provided.

(4) Anchor portion 34

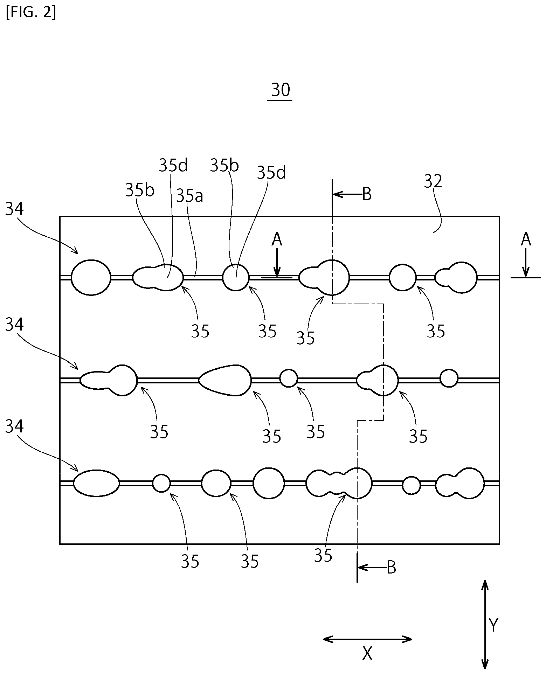

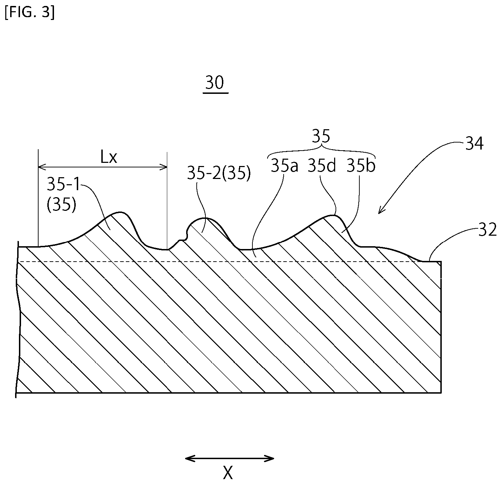

The anchor portion 34 formed on the metal bonding surface 32 has a plurality of projections 35 protruding from the metal bonding surface 32, as illustrated in Figs. 2 and 3. The plurality of projections 35 is provided side by side along a predetermined direction (hereinafter, the direction is referred to as a first direction) X.

In the present embodiment, as illustrated in Fig. 2, five anchor portions 34 are provided on the metal bonding surface 32 in a direction (hereinafter, the direction is a second direction) Y perpendicular to the first direction X with a gap. However, one anchor portion 34 may be provided on the metal bonding surface 32, and the plurality of anchor portions 34 may be provided on the metal bonding surface 32 in the second direction 2 with a gap. In a case where the plurality of anchor portions 34 is provided on the metal bonding surface 32, one anchor portion 34 may be provided parallel to the other anchor portions 34, as illustrated in Fig. 2, or may be provided so as to be inclined to the other anchor portions 34.

Each projection 35 that configures the anchor portion 34 has a protrusion strip portion 35a protruding from the first bonding surface 32 and an inflation portion 35b provided above the protrusion strip portion 35a.

The protrusion strip portion 35a has a narrow protrusion strip shape that extends in the first direction X. As a preferable aspect, the protrusion strip portion 35a may be linked to the protrusion strip portion 35a of the adjacent projection 35 in the first direction X. The protrusion strip portions 35a may be continuously linked to each other to connect all of the projections 35 that configure the anchor portion 34 as illustrated in Figs. 2 and 3, or some protrusion strip portions 35a may not be connected to the protrusion strip portions 35a of the adjacent projection 35 in the first direction X, and the protrusion strip portions 35a may be divided in the middle of the first direction X.

The inflation portion 35b provided above the protrusion strip portion 35a has a shape that widens to both sides from the protrusion strip portion 35a in the second direction Y. Accordingly, each projection 35 is narrowly constricted in the second direction Y at the protrusion strip portion 35a provided below the inflation portion 35b, and undercut portions 35c are provided on both sides of the projection 35 in the second direction Y. The inflation portion 35b can have various shapes, such as a substantial sphere, a substantial ellipse, or a solid in which a plurality of substantial spheres is connected to each other.

In each of the projections 35 that configure the anchor portion 34, a shape of a cross section (hereinafter, there is also a case of being referred to as "first directional cross section") along the first direction X including the top portion 35d of the projection 35 as illustrated in Fig. 3 is a shape that widens in the first direction X as approaching the metal bonding surface 32 such that the length along the first direction X on the metal bonding surface 32 side (that is, a contact part with the metal bonding surface 32) is the longest.

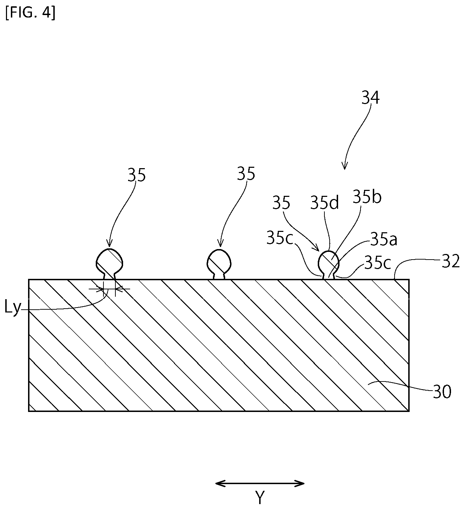

In other words, in each of the projections 35 that configure the anchor portion 34, a stem part (a part on the metal bonding surface 32 side) is narrowly constricted when viewed from the first direction X (refer to Fig. 4), and the stem part widens in the first direction X when viewed from the second direction Y (refer to Fig. 3).

As an example of the various dimensions of the plurality of projections 35 that configure the anchor portion 34, it is possible to set the length from the metal bonding surface 32 to the top portion 35d of the projection 35 (protrusion height of the projection 35) to be 50 μm to 200 μm, the length of the protrusion strip portion 35a in the second direction Y to be 10 μm to 100 μm, the length of the inflation portion 35b in the second direction Y to be 50 μm to 200 μm, the length of the protrusion strip portion 35a in the first direction X to be 50 μm or more, and the gap between the adjacent projections 35 in the first direction X to be 1 μm to 500 μm. The length of the protrusion strip portion 35a in the first direction X may be equal to the length of the anchor portion 34 in the first direction X.

As a preferable aspect, in each projection 35 that configures the anchor portion 34, a length Lx of the contact part with the metal bonding surface 32 in the first directional cross section as illustrated in Fig. 3 is longer than a length Ly of the contact part with the metal bonding surface 32 in the cross section (hereinafter, there is also a case of being referred to as "second directional cross section") along the second direction Y including the top portion 35d as illustrated in Fig. 4.

The first directional cross section of each projection 35 that configures the anchor portion 34 may have a shape of which the length in the first direction X gradually increases as approaching the metal bonding surface 32 from the top portion 35d, as in a projection 35-1, or may have a shape that has a part which is narrowly constricted in the first direction X, as in a projection 35-2, and that widens in the first direction X such that the constricted part on the metal bonding surface 32 side is the longest in the first direction X (refer to Fig. 3).

(5) Method for Manufacturing Joint 10

Next, a method for manufacturing the joint 10 will be described.

First, the synthetic resin member 20 and the metal member 30, which are molded into a predetermined shape, are prepared. An anchor formation process of forming the anchor portion 34 on the metal bonding surface 32 of the metal member 30, is executed. After this, a bonding process of bonding the resin bonding surface 22 of the synthetic resin member 20 to the metal bonding surface 32 on which the anchor portion 34 is formed, is performed. Accordingly, the joint 10 in which the synthetic resin member 20 is bonded to the metal bonding surface 32 of the metal member 30, is obtained. Hereinafter, the anchor formation process and the bonding process will be described in detail.

(5-1) Anchor Formation Process

In the anchor formation process, the metal bonding surface 32 of the metal member 30 to which the synthetic resin member 20 is bonded is preferably irradiated with a pulsed laser beam that satisfies a coefficient R of 0.1 or higher and 1.0 or lower expressed in Equation (1) below while moving (scanning) in the first direction X.

[Equation 1]

$$R = \frac{2h\sqrt{kt}}{v} \quad \cdots (1)$$

In Equation (1), h is the frequency of the laser beam, k is the thermal diffusion coefficient of the metal material that makes the metal member 30 $(m^2/sec)$, t is the pulse width of the laser beam (sec), and v is the scanning speed at which the laser beam is scanned (m/sec).

When the metal bonding surface 32 is irradiated with the pulsed laser beam with the above-described coefficient R of 0.1 or higher and 1.0 or lower, the projections 35 of which the stem part is narrowly constricted when viewed from the first direction X and the stem part widens in the first direction X when viewed from the second direction Y are provided side by side along the first direction X.

When the anchor portion 34 is formed by irradiating with the laser beam as described above in oxygen-containing gas, metal oxide is formed on the surface of the anchor portion 34.

In a case of forming the plurality of anchor portions 34 in the second direction Y with a gap, the metal bonding surface 32 is irradiated with the pulsed laser beam while scanning in the first direction X at the position with a predetermined gap in the second direction Y.

Before irradiating the metal bonding surface 32 of the metal member 30 with the pulsed laser beam to form the anchor portion 34, pretreatment of irradiating a location where the anchor portion 34 is formed with the laser beam on the metal bonding surface 32 and removing impurities adhering to the metal bonding surface 32, may be performed.

(5-2) Bonding Process

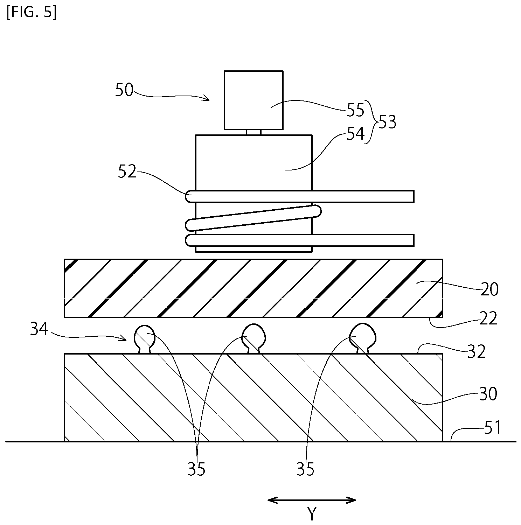

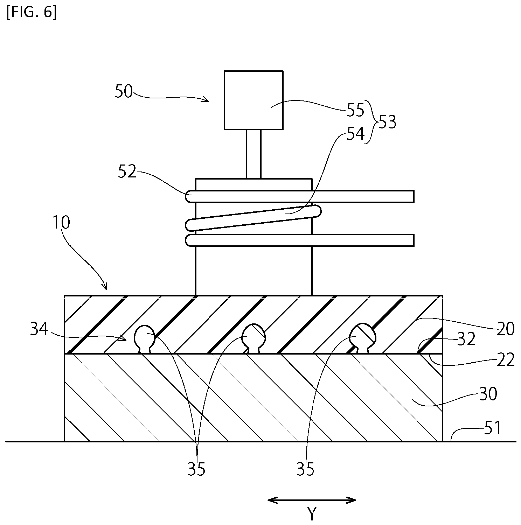

In the bonding process, a softening process of softening the resin bonding surface 22 of the synthetic resin member 20 by heating the metal member 30 and the synthetic resin member 20, is executed. Thereafter, a pressurizing process of bringing the metal bonding surface 32 into contact with the resin bonding surface 22 while pressurizing by making the plurality of projections 35 enter the synthetic resin member 20, by pressuring the synthetic resin member 20 to the metal member 30 while bringing the resin bonding surface 22 into contact with the plurality of projections 35, is executed. Accordingly, the joint 10 in which the resin bonding surface 22 is bonded to the metal bonding surface 32 is obtained. In the present embodiment, the softening process and the pressurizing process are performed using a bonding device 50 as illustrated in Figs. 5 and 6 to manufacture the joint 10.

The bonding device 50 includes: a stage 51 on which the metal member 30 is placed; a heating device 52 that inductively heats the metal member 30 placed on the stage 51; and a pressing device 53 that pressurizes and bonds the synthetic resin member 20 to the metal member 30.

The metal member 30 is placed on the stage 51 such that the metal bonding surface 32 provided with the anchor portion 34 faces the synthetic resin member 20.

The heating device 52 includes an induction heating coil connected to a power source device (not illustrated), and when a drive power source is input from the power source device, a magnetic field is generated from the induction heating coil to inductively heat the metal bonding surface 32 of the metal member 30 placed on the stage 51.

The pressing device 53 includes: a rod 54 formed of an insulator such as ceramics; and a pressurizing unit 55 that moves the rod 54 to press the synthetic resin member 20 against the metal bonding surface 32 of the metal member 30. The rod 54 may be inserted into a hollow part of the induction heating coil of the heating device 52 and disposed to face the synthetic resin member 20, as illustrated in Fig. 5. The pressurizing unit 55 preferably includes a pneumatic cylinder controlled by an electro-pneumatic regulator, a spring type pressurizer, or the like, and can control the speed at which the synthetic resin member 20 is moved together with the rod 54 and the pressure at which the synthetic resin member 20 is pressed against the metal member 30.

In order to manufacture the joint 10 using the bonding device 50, first, the metal member 30 is placed on the stage 51 such that the metal bonding surface 32 provided with the anchor portion 34 faces the synthetic resin member 20 to be set after this in an atmosphere where gas is present.

Next, the synthetic resin member 20 is disposed such that the resin bonding surface 22 faces the metal bonding surface 32 of the metal member 30 placed on the stage 51 with a gap therebetween. The distance between the metal bonding surface 32 of the metal member 30 and the resin bonding surface 22 of the synthetic resin member 20 is set at 0.001 mm to 10 mm, for example.

Next, the heating device 52 is disposed to face the metal bonding surface 32 of the metal member 30 across the synthetic resin member 20. In a case illustrated in Fig. 5, the heating device 52 is disposed above the synthetic resin member 20, and the synthetic resin member 20 is disposed between the heating device 52 and the metal member 30.

Next, the softening process of exposing the resin bonding surface 22 of the synthetic resin member 20 to a gas heated to a first temperature T1, is executed.

Specifically, the drive power source is supplied to the heating device 52 to generate a magnetic field from the induction heating coil provided in the heating device 52 and heat the metal bonding surface 32 of the metal member 30. At this time, the drive power source supplied to the heating device 52, the position of the induction heating coil provided in the heating device 52, or the like are adjusted such that the metal bonding surface 32 of the metal member 30 reaches the first temperature T1.

As the metal member 30 is heated as described above, the gas between the metal member 30 and the synthetic resin member 20 is heated to the first temperature T1. Accordingly, the resin bonding surface 22 of the synthetic resin member 20 facing the metal bonding surface 32 of the metal member 30 is exposed to the gas heated to the first temperature T1, and the resin bonding surface 22 reaches the first temperature T1. Then, the heating device 52 heats the metal bonding surface 32 of the metal member 30 for a predetermined time S1 (for example, 1 to 10 seconds) to execute the softening process of softening the resin bonding surface 22 side of the synthetic resin member 20, and then completes the softening process and moves to the pressurizing process.

When the softening process is completed, in order to continue executing the pressurizing process, the heating device 52 stops heating or reduces the amount of heating of the metal member 30 such that the temperature of the resin bonding surface 22, the metal bonding surface 32, and the surrounding thereof (the gas between the metal member 30 and the synthetic resin member 20) is lowered (cooled) until reaching a second temperature T2. The synthetic resin member 20 and the metal member 30 are bonded to each other at the second temperature T2.

In other words, in the pressurizing process, at a temperature (second temperature T2) lower than the first temperature T1, the pressing device 53 moves the synthetic resin member 20 at a predetermined speed V to make the synthetic resin member 20 collide with the metal member 30. At this time, the synthetic resin member 20 is pressed strongly against the metal member 30 at the position corresponding to a distal end of the rod 54, and is pressed against the metal member 30 at a predetermined pressure P. Accordingly, the joint 10 is obtained by making the plurality of projections 35 provided on the metal bonding surface 32 enter the resin bonding surface 22 side of the synthetic resin member 20, and bringing the resin bonding surface 22 into contact with the metal bonding surface 32 in a pressurized state. Then, the second process is completed.

The first temperature T1 can be a temperature which is equal to or higher than a deflection temperature under load Tf of the thermoplastic resin that makes the synthetic resin member 20 when a load of 1.8 MPa is applied. In a case where the synthetic resin member 20 is made of a resin in which a reinforcing material, such as carbon fiber, glass fiber, or talc, is blended into the thermoplastic resin, the deflection temperature under load Tf of the thermoplastic resin that makes the synthetic resin member 20 when a load of 1.8 MPa is applied is the deflection temperature under load Tf of the thermoplastic resin that does not contain the reinforcing material when a load of 1.8 MPa is applied.

An upper limit value of the first temperature T1 can be a temperature which is equal to or lower than a decomposition temperature of the thermoplastic resin that makes the synthetic resin member 20, that is, can be a temperature which is lower than a temperature at which the thermoplastic resin begins to vaporize. As an example, the upper limit value of the first temperature T1 may be 1000 °C. Preferably, the upper limit value of the first temperature T1 can be set to a temperature which is 20 °C higher than a melting point Tm of the thermoplastic resin that makes the synthetic resin member 20.

The second temperature T2 may be a temperature lower than the first temperature T1, but is preferably equal to or higher than the deflection temperature under load Tf of the thermoplastic resin that makes the synthetic resin member 20 when a load of 1.8 MPa is applied. The second temperature T2 is preferably lower than the melting point Tm of the thermoplastic resin that makes the synthetic resin member 20. The temperature difference between the first temperature T1 and the second temperature T2 is preferably 1 °C or higher and 20 °C or lower.

In the present specification, the melting point Tm of the thermoplastic resin is a value measured at a temperature raising speed of 10 °C per minute using a differential scanning calorimeter according to JIS K7121. The melting points of typical thermoplastic resins are 168 °C for polypropylene resin, 265 °C for nylon 66, 232 to 267 °C for polybutylene terephthalate resin, and 280°C for polyphenylene sulfide resin.

The deflection temperature under load Tf of the thermoplastic resin is a deflection temperature under load measured by a method according to JIS K7191 when a load of 1.8 MPa is applied. The deflection temperatures under load Tf of typical thermoplastic resins when a load of 1.8 MP is applied are 57 to 65 °C for polypropylene resin, 66 to 68 °C for nylon 66, 58 °C for polybutylene terephthalate resin, and 105 °C for polyphenylene sulfide resin.

The softening process is preferably executed in the oxygen-containing gas such as air. In other words, it is preferable to heat the metal bonding surface 32 and the resin bonding surface 22 to the first temperature T1 in an atmosphere of oxygen-containing gas, and expose the metal bonding surface 32 and the resin bonding surface 22 to the oxygen-containing gas heated to the first temperature T1.

When the softening process is executed in an atmosphere of the oxygen-containing gas, the resin bonding surface 22 of the synthetic resin member 20 reacts with the oxygen contained in the oxygen-containing gas to generate functional groups that can be chemically bound by neutralization reactions with basic or amphoteric oxides, on the resin bonding surface 22 of the synthetic resin member 20.

In general, the surface of the metal member 30 is oxidized and coated with an oxide film made of metal oxides, and thus, the functional groups generated on the resin bonding surface 22 are bonded to the metal oxides on the metal bonding surface 32 of the metal member 30 by van der Waals forces or hydrogen bonds. In addition, by bonding the synthetic resin member 20 and the metal member 30 to each other in a heated and pressurized state, the functional groups of the resin bonding surface 22 form covalent binding with the metal oxide of the metal member 30 by a neutralization reaction (dehydration condensation).

One example of the functional group generated on the resin bonding surface 22 includes at least one of a carboxyl group (-COOH), a carbonyl group (-CO-), or a hydroxy group (-OH) which are generated by the oxidative decomposition of the thermoplastic resin that makes the synthetic resin member 20. When the thermoplastic resin that makes the synthetic resin member 20 is a resin that contains sulfur atoms (heteroatoms), such as polyphenylene sulfide resin (PPS), as the functional group contained in the resin bonding surface 22, in addition to carboxyl groups, carbonyl groups, and hydroxy groups, the functional group containing heteroatoms such as sulfone groups (-SO3H), sulfonyl groups (-SO2-), sulfanyl groups (-SH), and disulfide groups (-SS-) may be contained.

As an example of the neutralization reaction that occurs by bonding the metal member 30 and the synthetic resin member 20 to each other, in a case where the resin bonding surface 22 has a carboxyl group (R-COOH) as a functional group and the metal member 30 is made of a divalent metal, the neutralization reaction occurs as illustrated in Equation (2) below.

$$2(R\text{-}COOH) + MeO = 2(R\text{-}COO) \text{ - } Me + H_2O\uparrow \dots (2)$$

In Equation (2), R is the main chain of the thermoplastic resin that makes the synthetic resin member 20, and Me is the metal that makes the metal member 30.

In a case where the softening process is executed in an atmosphere of the oxygen-containing gas, the second temperature T2 is preferably a temperature at which the functional group of the resin bonding surface 22 of the synthetic resin member 20 and the metal oxide formed on the metal bonding surface 32 of the metal member 30 can form the covalent binding by the neutralization reaction. The second temperature T2 is preferably a temperature at which the water generated by the neutralization reaction is removed from the reaction system. Since the second temperature T2 varies depending on the functional group and the type of metal oxide, it is difficult to specify the second temperature T2 in general, but the second temperature T2 is more preferable to be equal to or higher than 100 °C because the water generated by the neutralization reaction is easily removed.

In the softening process, the metal member 30 and the synthetic resin member 20 may be heated such that the entire metal member 30 and the synthetic resin member 20 reach the first temperature T1, but the resin bonding surface 22 may be exposed to gas heated to the first temperature T1, and the metal member 30 and the synthetic resin member 20 may be heated such that at least the metal bonding surface 32 and the resin bonding surface 22 reach the first temperature T1. Accordingly, the resin bonding surface 22 side of the synthetic resin member 20 is softened, it becomes easy for the projection 35 to enter the synthetic resin member 20 during the pressurizing process, and the deformation of the synthetic resin member 20 can be suppressed. The softening process is preferably performed such that the hardness on the resin bonding surface 22 side of the synthetic resin member 20 becomes less than that of the metal member 30.

In the pressurizing process, the pressure P when the synthetic resin member 20 is pressed against the metal member 30 is preferably a pressure which is equal to or higher than the compressive yield stress of the thermoplastic resin that makes the synthetic resin member 20. Since the pressure P varies depending on the thermoplastic resin that makes the synthetic resin member 20, it is difficult to specify the pressure P in general, but the pressure P is preferable to be 10 to 100 MPa.

In the present embodiment, a case where the pressing device 53 moves the synthetic resin member 20 toward the metal member 30 is described, but the metal member 30 may be moved toward the synthetic resin member 20.

In a case of locally bonding the metal member 30 and the synthetic resin member 20 as described in the present embodiment, the flat-surface shape of the bonding location may be any shape, such as point, line, or surface.

In the pressurizing process, the synthetic resin member 20 may be pressed against the metal member 30 such that all of the anchor portions 34 provided on the metal bonding surface 32 are pressurized, or the synthetic resin member 20 may be pressed against the metal member 30 locally (spot-like) such that some of the anchor portions 34 are pressurized.

In the present embodiment, while the synthetic resin member 20 is pressed against the metal member 30, the temperature of the synthetic resin member 20, the metal member 30, and the surrounding thereof may be maintained at the second temperature T2. Otherwise, the synthetic resin member 20 may be continuously in contact with the metal member 30 in a pressurized state until the temperature of the synthetic resin member 20, the metal member 30, and the surrounding thereof is cooled to be equal to or lower than a predetermined temperature. In such a case, it is preferable to bring the synthetic resin member 20 into contact with the metal member 30 in a pressurized state until the temperature of the synthetic resin member 20, the metal member 30, and the surrounding thereof is cooled to be equal to or lower than a glass transition temperature Tg of the thermoplastic resin that makes the synthetic resin member 20.

In the present embodiment, a case where the synthetic resin member 20 molded into a predetermined shape in advance is compressed to the metal member 30 while being heated is described as the bonding process. However, by inserting the metal member 30 in which the anchor portion 34 is formed into an injection mold, and injecting the molten synthetic resin material toward the metal bonding surface 32 within the injection mold, the synthetic resin member 20 may be bonded to the metal member 30.

(6) Effect

In the joint 10 of the present embodiment, the undercut portions 35c are provided on both sides in the second direction Y of the plurality of projections 35 that configure the anchor portion 34, and thus, it is possible to increase the bonding strength between the synthetic resin member 20 and the metal member 30.

In the plurality of projections 35, the shape of the first directional cross section is a shape that widens in the first direction X as approaching the metal bonding surface 32 such that the length along the first direction X is the longest on the metal bonding surface 32 side. Therefore, while maintaining the shape that easily achieves the anchor effect, the bonding strength of the plurality of projections 35 to the metal bonding surface 32 increases, the projection 35 itself is less likely to be damaged during or after the bonding of the synthetic resin member 20, and as a result, it is possible to improve the bonding strength of the joint 10.

Moreover, since the plurality of projections 35 that configure the anchor portion 34 is provided side by side along the first direction X, multiple projections 35 can be provided on the metal bonding surface 32 with an appropriate gap, and it is possible to improve the bonding strength of the joint 10.

In the present embodiment, in a case where the protrusion strip portions 35a of the projections 35 adjacent to each other in the first direction X are linked to each other, the bonding strength of the projections 35 to the metal bonding surface 32 can be further improved.

In the present embodiment, in a case where the first directional cross section of the projection 35 is a shape of which the length in the first direction X gradually increases as approaching the metal bonding surface 32 from the top portion 35d, as in the projection 35, the bonding strength of the projection 35 to the metal bonding surface 32 can be further improved.

In the present embodiment, in a case where the hardness of the metal member 30 is higher than that of the synthetic resin member 20, it becomes easy for the plurality of projections 35 provided in the metal member 30 to enter the synthetic resin member 20, the plurality of projections 35 is less likely to be damaged, and high anchor effect can be obtained.

In the present embodiment, in a case where the metal oxide is formed on the surface of the anchor portion 34, the functional groups of the resin bonding surface 22 of the synthetic resin member 20 bond to the metal oxide of the anchor portion 34 by dipolar interaction. In addition, the functional groups of the resin bonding surface 22 form a covalent binding with the metal oxide through a neutralization reaction (dehydration condensation). Therefore, it is possible to improve the bonding strength of the joint 10.

(Second Embodiment)

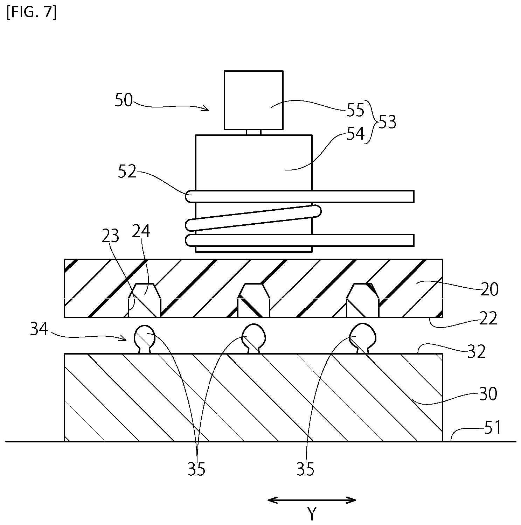

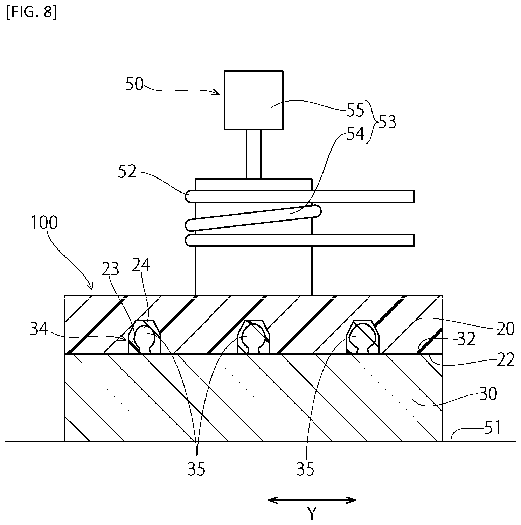

Next, a second embodiment of the present disclosure will be described with reference to Figs. 7 and 8. The same configurations as those of the first embodiment will be given the same reference numerals, and the description of the configurations will be omitted.

In the present embodiment, a groove 23 that extends along the first direction X is formed on the resin bonding surface 22. The groove 23 is provided at a position corresponding to the plurality of projections 35 that configures the anchor portion 34 provided in the metal member 30. In the bonding process, the plurality of projections 35 provided on the metal bonding surface 32 are fitted into the grooves 23 to obtain a joint 100.

It is preferable that a filling process of filling the groove 23 provided on the resin bonding surface 22 with a third member (hereinafter, there is also a case of being referred to as "filling member") 24 is performed. Any material can be used as a material that makes the filling member 24, but it is preferable to use a material having a lower hardness than the metal member 30 when bonding the metal member 30 and the synthetic resin member 20 to each other, and more preferable to use a material that is heat-cured after bonding the metal member 30 and the synthetic resin member 20 to each other. It is preferable to use a thermosetting resin such as epoxy resin or phenolic resin as the filling member 24.

In such a joint 100 of the second embodiment, the softening process of softening the filling member 24 by heating the metal member 30 and the filling member 24, is executed. Thereafter, the pressurizing process of bringing the metal bonding surface 32 into contact with the resin bonding surface 22 while pressurizing by making the plurality of projections 35 enter the filling member 24, by pressuring the synthetic resin member 20 to the metal member 30 while bringing the filling member 24 into contact with the plurality of projections 35, is executed. Accordingly, the joint 100 in which the resin bonding surface 22 is bonded to the metal bonding surface 32 is obtained.

In the present embodiment, since the plurality of projections 35 provided on the metal bonding surface 32 is fitted into the grooves 23 provided on the resin bonding surface 22, it becomes easy to enter the synthetic resin member 20 and the bonding process can be easily performed.

In a case where the grooves 23 provided on the resin bonding surface 22 are filled with the filling member 24, the plurality of projections 35 is less likely to come out of the grooves 23, and it is possible to improve the bonding strength of the joint 100.

(Change Example)

The present disclosure is not limited to the above-described embodiments. Each of the above-described embodiments is presented as examples and is not intended to limit the scope of the disclosure. The new embodiments can be implemented in various other forms, and various omissions, substitutions, and changes can be made without departing from the gist of the disclosure.

For example, in the above-described first and second embodiments, a case of bonding the metal member 30 in which the anchor portion 34 is formed and the synthetic resin member 20 made of thermoplastic resin to each other is described, but the present disclosure can also be applied to a case of bonding the metal members made of metal to each other or a case of bonding the resin members made of resin to each other.

In the above-described first and second embodiments, the softening process of softening the resin bonding surface 22 side of the synthetic resin member 20 by heating is executed in the manufacture of the joint 10. However, in addition to or instead of heating, the softening process may be performed by humidification or other methods.

(Example)

Hereinafter, Example and Comparative Examples 1 and 2 of the present disclosure will be described. The present disclosure is not limited to Example.

In the Example and Comparative Examples 1 and 2, by irradiating the metal bonding surface of the metal member with the laser beam in the second direction Y while scanning in the first direction X every 0.5 mm gap, the anchor portion is formed on the entire location of the metal bonding surface that is in contact with the resin bonding surface. Then, a synthetic resin member is bonded to the metal bonding surface on which the anchor portion is formed. The conditions of the irradiated laser beam on the metal bonding surface of Example and Comparative Examples 1 and 2 are illustrated in Table 1 described below.

The details of the metal member and the synthetic resin member which are used in Example and Comparative Examples 1 and 2, the dimension of the metal member, the dimension of the synthetic resin member, and the bonding area (overlap area) between the synthetic resin member and the metal member, are as follows.

·Metal member: SUS304 with a surface oxidized and roughened by heating to the melting point of SUS304, which is 1450 °C or higher, for one second by laser irradiation

·Synthetic resin member: SUSTEEL (registered trademark) SGX120
·Dimension of metal member: 18 mm x 45 mm x 1.6 mm
·Dimension of synthetic resin member: 10 mm x 40 mm x 3.0 mm
·Bonding area between metal member and synthetic resin member: 10 mm x 5 mm Each evaluation method is as follows.

(a) SEM Observation of Anchor portion

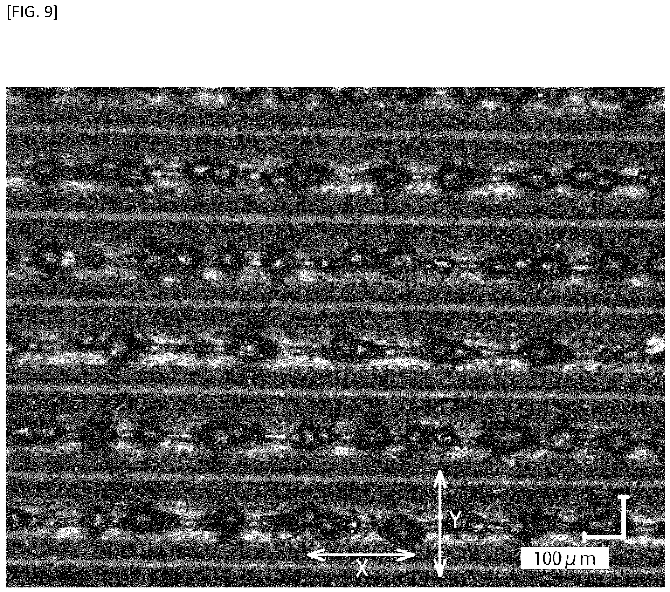

For the metal members of Example and Comparative Examples 1 and 2, in which the anchor portion is formed on the metal bonding surface, SEM observation of the anchor portion is performed in a state where the synthetic resin member is not bonded. Figs. 9 to 11 illustrate a plan view and sectional views of the metal member of Example. In Fig. 9, the sign X indicates the first direction, which is the scan direction of the laser beam, and the sign Y indicates the second direction.

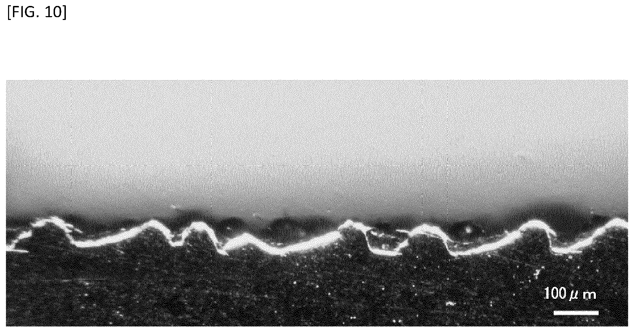

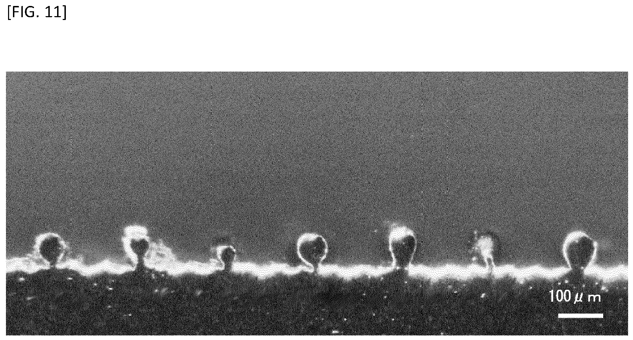

As illustrated in Fig. 9, on the metal bonding surface of the metal member in Example, the plurality of projections is provided side by side along the first direction X. In the plurality of projections provided on the metal bonding surface, as illustrated in Fig. 10, the first directional cross section of the plurality of projections is a shape of which the length in the first direction X increases as approaching the metal bonding surface from the top portion of the projection. As illustrated in FIG. 11, the plurality of projections has a protrusion strip portion and an inflation portion that widens to both sides from the protrusion strip portions in the second direction Y above the protrusion strip portion, and are provided with the undercut portion on both sides of the projection in the second direction Y.

In the plurality of projections, the cross-sectional shape along the first direction including the top portion is a shape that widens in the first direction X as approaching the metal bonding surface such that the length is the longest in the first direction X on the metal bonding surface side, and the length of the contact part with the metal bonding surface in the first directional cross section is longer than the length of the contact part with the metal bonding surface 32 in the second directional cross section.

On the metal bonding surface of the metal member in Comparative Example 1, the plurality of protrusion strip portions extending in the first direction X is provided in the second direction Y with a gap, but no inflation portion is formed above the protrusion strip portion.

On the metal bonding surface of the metal member in Comparative Example 2, a plurality of recessed grooves extending in the first direction X is provided in the second direction Y with a gap, but no protrusion strip portion or inflation portion is formed.

(b) Bonding Strength

In the test method specified in JIS K 6850, the dimension of the metal member, the dimension of the synthetic resin member, and the bonding area between the synthetic resin member and the metal member are changed as described above, and with the other conditions set in accordance with the same standard, the measurement is performed at a tensile speed of 10 mm/min and a measurement temperature of 25 °C using a tensile tester (SHIMADZU CORPORATION, AUTOGRAPH AGX-V). Four specimens of Example and Comparative Examples 1 and 2 are made respectively, and the average value of the four measured values is used as the respective bonding strength.

[Table 1]

|  | Example 1 | Comparative Example 1 | Comparative Example 2 |
|---|---|---|---|
| Wavelength h (nm) | 1064 | 1064 | 1064 |
| Frequency h (Hz) | 50 | 50 | 100 |
| Scanning speed v (mm/sec) | 150 | 70 | 1000 |
| Pulse width t (sec) | 100 | 100 | 27.6 |
| Thermal diffusion coefficient of metal member (m$^2$/sec) | 6.61 | 6.61 | 6.61 |
| Coefficient R | 0.542 | 1.161 | 0.085 |
| Bonding strength (MPa) | 29.5 | 23.7 | 17.7 |

The results are 29.5 MPa in Example compared to 23.7 MPa and 17.7 MPa in Comparative Examples 1 and 2, and it is possible to confirm that the bonding strength is significantly improved in the joint of Example.

Reference Signs List

10 joint

20 synthetic resin member

22 resin bonding surface

30 metal member

32 metal bonding surface

34 anchor portion

35 projection

35a protrusion strip portion

35b inflation portion

35c undercut portion

35d top portion

**Claims**

1. A joint (10) including a first member (30) having a first bonding surface (32) provided with an anchor portion (34) and a second member (20) having a second bonding surface (22), and bonds the second bonding surface (22) to the first bonding surface (32), wherein

    the anchor portion (34) has a plurality of projections (35) that protrude from the first bonding surface (32) and are provided side by side along a first direction,
    wherein the projections (35) have a protrusion strip portion (35a) that protrudes from the first bonding surface (32) and extends along the first direction, an inflation portion (35b) that is provided above the protrusion strip portion (35a) and widens in a second direction which is a direction perpendicular to the first direction from the protrusion strip portion (35a), and undercut portions (35c) provided on both sides of the protrusion strip portion (35a) in the second direction, as well as

a cross-sectional shape along the first direction including a top portion (35d), which widens in the first direction as approaching the first bonding surface (32) such that a length along the first direction is the longest on the first bonding surface side.

2. The joint (10) according to claim 1, wherein
the protrusion strip portions (35a) of the plurality of projections (35) adjacent to each other in the first direction are linked to each other.

3. The joint (10) according to any one of claims 1 or 2, wherein
a cross section along the first direction including the top portions (35d) of the plurality of projections (35) has a shape of which a length in the first direction increases as approaching the first bonding surface (22) from the top portion (35d).

4. The joint (10) according to any one of claims 1 to 3, wherein
the second member (20) has a groove extending along the first direction on the second bonding surface (22), and the plurality of projections (35) is fitted into the groove.

5. The joint (10) according to claim 4, including a third member filled in the groove.

6. The joint (10) according to any one of claims 1 to 3, wherein
a hardness of the first member (30) is higher than that of the second member (20).

7. The joint (10) according to any one of claims 1 to 6, wherein
a metal oxide is provided on a surface of the anchor portion (34).

8. A method for manufacturing a joint in which a second bonding surface (22) of a second member (20) is bonded to a first bonding surface (32) of a first member (30) provided with an anchor portion (34), the method comprising:

an anchor formation process of forming the anchor portion (34) that protrudes from the first bonding surface (32) and has a plurality of projections (35); and

a bonding process of bringing the first bonding surface (32) into contact with the second bonding surface (22) by making the plurality of projections (35) enter the second member (20), by pressurizing while bringing the second member (20) into contact with the plurality of projections (35), after the anchor formation process, wherein
in the anchor formation process, by irradiating the first bonding surface (32) with a pulsed laser beam while scanning in a first direction, a plurality of projections (35) are provided side by side along the first direction, which have undercut portions (35c) on both sides in a second direction which is a direction perpendicular to the first direction, and

a cross-sectional shape along the first direction including a top portion (35d), which widens in the first direction as approaching the first bonding surface (32) such that a length along the first direction is the longest on the first bonding surface side.

9. The method for manufacturing a joint (10) according to claim 8, wherein
the bonding process includes a softening process of softening the second member (20) on the second bonding surface side.

10. The method for manufacturing a joint (10) according to claim 8, further comprising:

a groove formation process of forming a groove extending along the first direction on the second bonding surface (22), wherein
the plurality of projections (35) is fitted into the grooves in the bonding process.

11. The method for manufacturing a joint (10) according to claim 10, wherein
the groove formation process includes a process of filling the groove with a third member, and the bonding process includes a softening process of softening the third member.

**Patentansprüche**

1. Verbindung (10), die ein erstes Element (30), das eine erste Verbindungsfläche (32) aufweist, die mit einem Verankerungsabschnitt (34) versehen ist, und ein zweites Element (20) enthält, das eine zweite Verbindungsfläche (22) aufweist und das die zweite Verbindungsfläche (22) mit der ersten Verbindungsfläche (32) verbindet, wobei

   der Verankerungsabschnitt (34) eine Vielzahl an Vorsprüngen (35) aufweist, die von der ersten Verbindungsfläche (32) hervorstehen und die Seite an Seite entlang einer ersten Richtung vorgesehen sind, wobei die Vorsprünge (35) einen Vorsprungsstreifenabschnitt (35a), der von der ersten Verbindungsfläche (32) vorsteht und der sich entlang der ersten Richtung erstreckt, einen Ausdehnungsabschnitt (35b), der über dem Vorsprungsstreifenabschnitt (35a) vorgesehen ist und der sich in einer zweiten Richtung, die eine Richtung senkrecht zu der ersten Richtung ist, von dem Vorsprungsstreifenabschnitt (35a) aus verbreitert, und hinterschnittene Abschnitte (35c), die auf beiden Seiten des Vorsprungsstreifenabschnitts (35a) in der zweiten Richtung vorgesehen sind, sowie eine Querschnittsform entlang der ersten Richtung aufweist, die einen oberen Abschnitt (35d) aufweist, der sich in der ersten Richtung bei Annäherung an die erste Verbindungsfläche (32) auf eine solche Weise verbreitert, dass eine Länge entlang der ersten Richtung auf der Seite der ersten Verbindungsfläche am längsten ist.

2. Verbindung (10) nach Anspruch 1, wobei
   die Vorsprungsstreifenabschnitte (35a) der Vielzahl der Vorsprünge (35), die in der ersten Richtung aneinander angrenzen, miteinander verbunden sind.

3. Verbindung (10) nach einem der Ansprüche 1 oder 2, wobei
   ein Querschnitt entlang der ersten Richtung, der die oberen Abschnitte (35d) der Vielzahl der Vorsprünge (35) enthält, eine Form aufweist, deren Länge in der ersten Richtung zunimmt, wenn man sich der ersten Verbindungsfläche (22) von dem oberen Abschnitt (35d) aus nähert.

4. Verbindung (10) nach einem der Ansprüche 1 bis 3, wobei

   das zweite Element (20) eine Nut aufweist, die sich entlang der ersten Richtung auf der zweiten Verbindungsfläche (22) erstreckt, und
   die Vielzahl der Vorsprünge (35) in die Nut eingepasst ist.

5. Verbindung (10) nach Anspruch 4, die ein drittes Element aufweist, das in die Nut gefüllt ist.

6. Verbindung (10) nach einem der Ansprüche 1 bis 3, wobei
   die Härte des ersten Elements (30) größer als die des zweiten Elements (20) ist.

7. Verbindung (10) nach einem der Ansprüche 1 bis 6, wobei
   ein Metalloxid auf einer Oberfläche des Verankerungsabschnitts (34) vorgesehen ist.

8. Verfahren zur Herstellung einer Verbindung, bei dem eine zweite Verbindungsfläche (22) eines zweiten Elements (20) mit einer ersten Verbindungsfläche (32) eines ersten Elements (30) verbunden wird, das mit einem Verankerungsabschnitt (34) versehen ist, wobei das Verfahren umfasst:

   einen Verankerungsbildungsprozess zum Bilden des Verankerungsabschnitts (34), der von der ersten Verbindungsfläche (32) vorsteht und der eine Vielzahl an Vorsprüngen (35) aufweist, und
   einen Verbindungsprozess, bei dem die erste Verbindungsfläche (32) mit der zweiten Verbindungsfläche (22) in Kontakt gebracht wird, indem die Vielzahl der Vorsprünge (35) in das zweite Element (20) eindringen, indem nach dem Verankerungsbildungsprozess Druck ausgeübt wird, während das zweite Element (20) mit der Vielzahl der Vorsprünge (35) in Kontakt gebracht wird, wobei
   bei dem Verankerungsbildungsprozess durch ein Bestrahlen der ersten Bindungsfläche (32) mit einem gepulsten Laserstrahl, während in einer ersten Richtung gescannt wird, eine Vielzahl an Vorsprüngen (35) nebeneinander entlang der ersten Richtung bereitgestellt werden, die auf beiden Seiten in einer zweiten Richtung, die eine Richtung senkrecht zu der ersten Richtung ist, und die eine Querschnittsform entlang der ersten Richtung mit einem oberen Abschnitt (35d) aufweist, der sich in der ersten Richtung verbreitert, wenn er sich der ersten Verbindungsfläche (32) nähert, so dass eine Länge entlang der ersten Richtung auf der Seite der ersten Verbindungsfläche am längsten ist.

**9.** Verfahren zur Herstellung einer Verbindung (10) nach Anspruch 8, wobei
der Verbindungsprozess einen Erweichungsprozess eines Erweichens des zweiten Elements (20) auf der Seite der zweiten Verbindungsfläche umfasst.

**10.** Verfahren zur Herstellung einer Verbindung (10) nach Anspruch 8, das ferner umfasst:

einen Nutbildungsprozess eines Bildens einer Nut, die sich entlang der ersten Richtung auf der zweiten Verbindungsfläche (22) erstreckt, wobei
die Vielzahl der Vorsprünge (35) in die Nuten bei dem Verbindungsprozess eingepasst wird.

**11.** Verfahren zur Herstellung einer Verbindung (10) nach Anspruch 10, wobei
der Nutbildungsprozess einen Prozess des Füllens der Nut mit einem dritten Element umfasst und der Verbindungsprozess einen Erweichungsprozess eines Erweichens des dritten Elements umfasst.

**Revendications**

**1.** Joint (10) comprenant un premier élément (30) ayant une première surface de liaison (32) pourvue d'une partie d'ancrage (34) et un deuxième élément (20) ayant une deuxième surface de liaison (22), et qui lie la deuxième surface de liaison (22) à la première surface de liaison (32), dans lequel

la partie d'ancrage (34) a une pluralité de protubérances (35) qui font saillie à partir de la première surface de liaison (32) et sont disposées côte à côte le long d'une première direction,
dans lequel les protubérances (35) ont une partie de bande en saillie (35a) qui fait saillie à partir de la première surface de liaison (32) et s'étend le long de la première direction, une partie de gonflage (35b) qui est disposée au-dessus de la partie de bande en saillie (35a) et s'élargit dans une deuxième direction qui est une direction perpendiculaire à la première direction à partir de la partie de bande en saillie (35a), et des parties en contre-dépouille (35c) disposées des deux côtés de la partie de bande en saillie (35a) dans la deuxième direction, ainsi qu'une forme de section transversale le long de la première direction comprenant une partie supérieure (35d), qui s'élargit dans la première direction en s'approchant de la première surface de liaison (32) de sorte qu'une longueur le long de la première direction est la plus longue sur le côté de la première surface de liaison.

**2.** Joint (10) selon la revendication 1, dans lequel
les parties de bande en saillie (35a) de la pluralité de protubérances (35) adjacentes l'une à l'autre dans la première direction sont reliées l'une à l'autre.

**3.** Joint (10) selon l'une quelconque des revendications 1 ou 2, dans lequel
une section transversale le long de la première direction comprenant les parties supérieures (35d) de la pluralité de protubérances (35) a une forme dont une longueur dans la première direction augmente en s'approchant de la première surface de liaison (22) à partir de la partie supérieure (35d).

**4.** Joint (10) selon l'une quelconque des revendications 1 à 3, dans lequel
le deuxième élément (20) a une rainure s'étendant le long de la première direction sur la deuxième surface de liaison (22), et la pluralité de protubérances (35) est ajustée dans la rainure.

**5.** Joint (10) selon la revendication 4, comprenant un troisième élément chargé dans la rainure.

**6.** Joint (10) selon l'une quelconque des revendications 1 à 3, dans lequel
une dureté du premier élément (30) est supérieure à celle du deuxième élément (20).

**7.** Joint (10) selon l'une quelconque des revendications 1 à 6, dans lequel un oxyde métallique est disposé sur une surface de la partie d'ancrage (34).

**8.** Procédé de fabrication d'un joint dans lequel une deuxième surface de liaison (22) d'un deuxième élément (20) est liée à une première surface de liaison (32) d'un premier élément (30) pourvu d'une partie d'ancrage (34), le procédé comprenant :

un processus de formation d'ancrage consistant à former la partie d'ancrage (34) qui fait saillie à partir de la première surface de liaison (32) et a une pluralité de protubérances (35) ; et

un processus de liaison consistant à amener la première surface de liaison (32) en contact avec la deuxième surface de liaison (22) en faisant entrer la pluralité de protubérances (35) dans le deuxième élément (20), par mise sous pression tout en amenant le deuxième élément (20) en contact avec la pluralité de protubérances (35), après le processus de formation d'ancrage, dans lequel

dans le processus de formation d'ancrage, en irradiant la première surface de liaison (32) avec un faisceau laser pulsé en balayant dans une première direction, une pluralité de protubérances (35) sont fournies côte à côte le long de la première direction, qui ont des parties en contre-dépouille (35c) des deux côtés dans une deuxième direction qui est une direction perpendiculaire à la première direction, et une forme de section transversale le long de la première direction comprenant une partie supérieure (35d), qui s'élargit dans la première direction en s'approchant de la première surface de liaison (32) de sorte qu'une longueur le long de la première direction est la plus longue sur le côté de la première surface de liaison.

9. Procédé de fabrication d'un joint (10) selon la revendication 8, dans lequel
le processus de liaison comprend un processus de ramollissement consistant à ramollir le deuxième élément (20) sur le côté de la deuxième surface de liaison.

10. Procédé de fabrication d'un joint (10) selon la revendication 8, comprenant en outre :

un processus de formation de rainure consistant à former une rainure s'étendant le long de la première direction sur la deuxième surface de liaison (22), dans lequel
la pluralité de protubérances (35) est ajustée dans les rainures dans le processus de liaison.

11. Procédé de fabrication d'un joint (10) selon la revendication 10, dans lequel
le processus de formation de rainure comprend un processus de remplissage de la rainure avec un troisième élément, et le processus de liaison comprend un processus de ramollissement consistant à ramollir le troisième élément.

[FIG. 1]

<u>34</u>

[FIG. 2]

[FIG. 3]

<u>30</u>

[FIG. 4]

[FIG. 5]

[FIG. 6]

[FIG. 7]

[FIG. 8]

[FIG. 9]

[FIG. 10]

[FIG. 11]

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3228440 A1
- DE 102017210639 A1
- EP 3078480 A1
- DE 102016211708 A1
- DE 102015206534 A1
- US 2008003401 A1
- JP H06106693 A
- DE 102019208677 A1
- JP 2006501070 A
- JP H07116870 A
- JP 2016130003 A